# EUROPEAN PATENT APPLICATION

(11) **EP 4 564 929 A1**
(43) Date of publication of application: **04.06.2025**
(21) Application number: 22953184.3
(22) Date of filing: 29.07.2022
(51) Int. Cl.: H04W 52/02

(54) **TERMINAL, BASE STATION, WIRELESS COMMUNICATION SYSTEM, AND WIRELESS COMMUNICATION METHOD**

(71) Applicant: NTT DOCOMO, INC., Tokyo 100-6150 (JP)
(72) Inventor: TAKAHASHI, Yuki, Tokyo 100-6150 (JP); NAGATA, Satoshi, Tokyo 100-6150 (JP)
(74) Representative: Hoffmann Eitle
(86) International application number: PCT/JP2022/029331
(87) International publication number: WO 2024/024096

(57) **Abstract**

A terminal includes: a communication unit that performs communication with a base station; and a control unit that assumes communication to be performed with the base station according to a network state defined by at least one of whether the base station receives an uplink signal and whether the base station transmits a downlink signal, in which the network state is defined by a unit time as a minimum unit, and is configured quasi-statically.

## Description

### TECHNICAL FIELD

The present disclosure relates to a terminal, a base station, a radio communication system, and a radio communication method compatible with a mechanism that can appropriately achieve a reduction in the power consumption of a network.

### BACKGROUND

The 3rd Generation Partnership Project (3GPP: Registered Trademark) has prepared a specification for the 5th generation mobile communication system (which may be called 5G, New Radio (NR), or Next Generation (NG)), and is also in the process of specifying the next generation called Beyond 5G, 5G Evolution, or 6G.

Further, in the 3GPP, studies are underway to reduce the power consumption of a network (base station) (for example, NON-PATENT LITERATURE 1).

### CITATION LIST

### NON-PATENT LITERATURE

NON-PATENT LITERATURE 1: "New SI: Study on network energy savings for NR", RP-213554, 3GPP TSG RAN Meeting #94e, 3GPP, December 2021

### SUMMARY OF THE INVENTION

In the meantime, although it has been decided to proceed with studies to reduce the power consumption of a network, the details of a reduction in the power consumption of the network have not yet been decided.

Therefore, the present invention has been made to solve the above problems, and an object of the present invention is to provide a terminal, a base station, a radio communication system, and a radio communication method compatible with a mechanism that can appropriately achieve a reduction in the power consumption of a network.

An aspect of the present disclosure is a terminal including: a communication unit that performs communication with a base station; and a control unit that assumes communication to be performed with the base station according to a network state defined by at least one of whether the base station receives an uplink signal and whether the base station transmits a downlink signal, in which the network state is defined by a unit time as a minimum unit, and is configured quasi-statically.

An aspect of the present disclosure is a base station including: a communication unit that performs communication with a terminal; and a control unit that assumes communication to be performed with the terminal according to a network state defined by at least one of whether the base station receives an uplink signal and whether the base station transmits a downlink signal, in which the network state is defined by a unit time as a minimum unit, and is configured quasi-statically.

An aspect of the present disclosure is a radio communication system including a terminal and a base station, and the terminal includes: a communication unit that performs communication with the base station; and a control unit that assumes communication to be performed with the base station according to a network state defined by at least one of whether the base station receives an uplink signal and whether the base station transmits a downlink signal, in which the network state is defined by a unit time as a minimum unit, and is configured quasi-statically.

An aspect of the present disclosure is a radio communication method including: a step of performing communication with a base station; and a step of assuming communication to be performed with the base station according to a network state defined by at least one of whether the base station receives an uplink signal and whether the base station transmits a downlink signal, in which the network state is defined by a unit time as a minimum unit, and is configured quasi-statically.

### BRIEF DESCRIPTION OF DRAWINGS

[FIG. 1] FIG. 1 is an overall schematic diagram of a radio communication system 10.
[FIG. 2] FIG. 2 is a diagram illustrating the frequency ranges used in the radio communication system 10.
[FIG. 3] FIG. 3 is a diagram illustrating a configuration example of radio frames, sub-frames, and slots used in the radio communication system 10.
[FIG. 4] FIG. 4 is a functional block diagram of UE 200.
[FIG. 5] FIG. 5 is a functional block diagram of gNB 100.
[FIG. 6] FIG. 6 is a diagram explaining operation example 1.
[FIG. 7] FIG. 7 is a diagram explaining the operation example 1.
[FIG. 8] FIG. 8 is a diagram explaining the operation example 1.
[FIG. 9] FIG. 9 is a diagram explaining the operation example 1.
[FIG. 10] FIG. 10 is a diagram explaining the operation example 1.
[FIG. 11] FIG. 11 is a diagram explaining operation example 2.
[FIG. 12] FIG. 12 is a diagram explaining operation example 3.
[FIG. 13] FIG. 13 is a diagram illustrating an example of a hardware configuration of the gNB 100 and the UE 200.
[FIG. 14] FIG. 14 is a diagram illustrating a configuration example of a vehicle 2001.

### DETAILED DESCRIPTION OF THE INVENTION

An embodiment will be described below with reference to the drawings. Note that the same or similar reference numerals have been attached to the same functions and configurations, and a description thereof will be omitted as appropriate.

### [Embodiment]

### (1) Overall schematic configuration of radio communication system

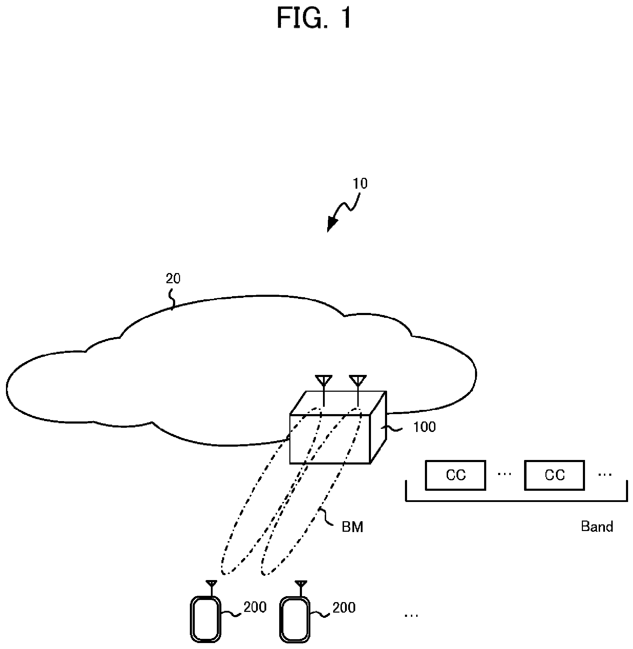

FIG. 1 is an overall schematic diagram of a radio communication system 10 according to an embodiment. The radio communication system 10 is a radio communication system according to 5G New Radio (NR), and includes a Next Generation-Radio Access Network 20 (hereinafter, referred to as NG-RAN 20) and a terminal 200 (hereinafter, referred to as UE (User Equipment) 200).

The radio communication system 10 may be a radio communication system according to a scheme called Beyond 5G, 5G Evolution, or 6G.

The NG-RAN 20 includes a radio base station 100 (hereinafter, gNB 100). The specific configuration of the radio communication system 10 including the number of gNBs and UEs is not limited to the example illustrated in FIG. 1.

The NG-RAN 20 actually includes a plurality of NG-RAN nodes, specifically gNBs (or ng-eNBs), and is connected to a core network (5GC, not shown) according to 5G. The NG-RAN 20 and 5GC may be simply referred to as a network.

The gNB 100 is a radio base station according to 5G, and performs radio communication with the UE 200 according to 5G. By controlling radio signals transmitted from a plurality of antenna elements, the gNB 100 and the UE 200 can support Massive MIMO (Multiple-Input Multiple-Output) that generates a more directional beam BM, carrier aggregation (CA) that uses a plurality of component carriers (CCs) bundled together, dual connectivity (DC) that simultaneously performs communication to two or more transport blocks between the UE and each of the two NG-RAN nodes, and the like.

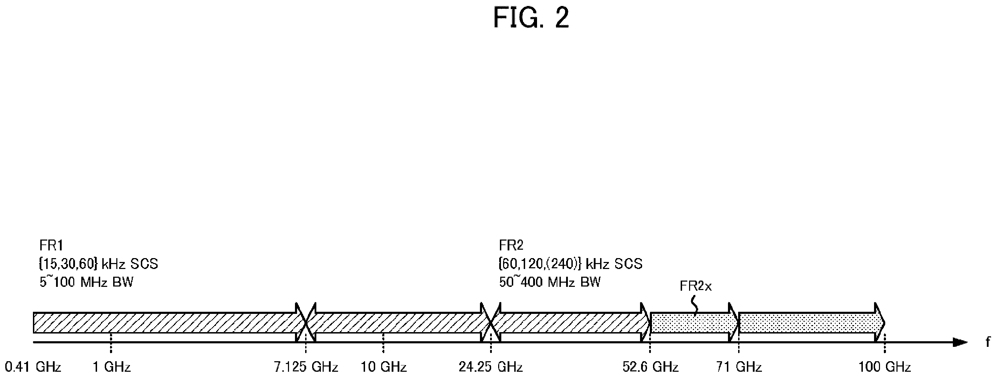

The radio communication system 10 supports a plurality of frequency ranges (FR). FIG. 2 illustrates the frequency ranges used in the radio communication system 10.

As illustrated in FIG. 2, the radio communication system 10 supports FR1 and FR2. The frequency band of each FR (frequency range) is as follows:
- FR1: 410 MHz to 7.125 GHz
- FR2: 24.25 MHz to 52.6 GHz

In FR1, Sub-Carrier Spacing (SCS) of 15, 30 or 60 kHz may be used, and a bandwidth (BW) of 5 to 100 MHz may be used. FR2 has a higher frequency than FR1, and SCS of 60 or 120 kHz (may include 240 kHz) may be used, and a bandwidth (BW) of 50 to 400 MHz may be used.

The SCS may be interpreted as numerology. The numerology is defined in 3GPP TS38.300, and corresponds to one sub-carrier spacing in the frequency domain.

Further, the radio communication system 10 also supports a higher frequency band than that of FR2. Specifically, the radio communication system 10 supports a frequency band exceeding 52.6 GHz and up to 71 GHz or 114.25 GHz. Such a higher frequency band may be referred to as "FR2x" for the sake of convenience.

In order to solve the problem that the effect of phase noise becomes large in a high frequency band, when a band exceeding 52.6 GHz is used, Cyclic Prefix-Orthogonal Frequency Division Multiplexing (CP-OFDM)/Discrete Fourier Transform-Spread (DFT-S-OFDM) having larger sub-carrier spacing (SCS) may be applied.

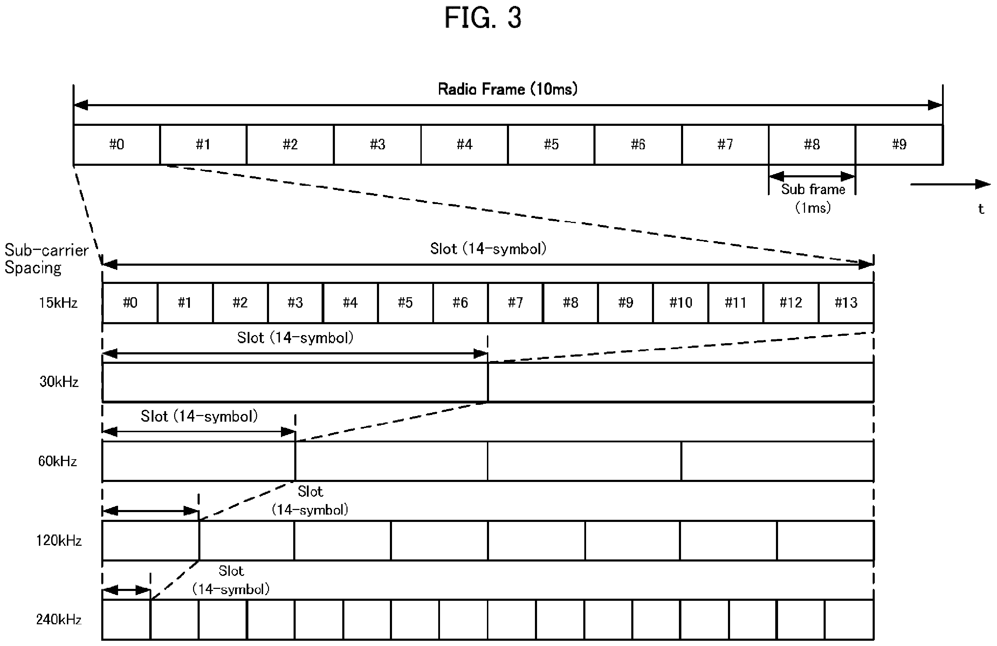

FIG. 3 illustrates a configuration example of radio frames, subframes, and slots used in the radio communication system 10.

As illustrated in FIG. 3, one slot is constituted of 14 symbols, and, the symbol period (and slot period) becomes shorter as the SCS becomes larger (wider). The SCS is not limited to the spacing (frequency) illustrated in FIG. 3. For example, 480 kHz, 960 kHz, or the like may be used.

Note that the number of symbols constituting one slot may not necessarily be 14 symbols (for example, 28 or 56 symbols). Further, the number of slots for each subframe may vary depending on the SCS.

Note that the time direction (t) illustrated in FIG. 3 may be referred to as a time domain, a symbol period, symbol time, or the like. The frequency direction may be referred to as a frequency domain, a resource block, a sub-carrier, a Bandwidth Part (BWP), or the like.

A DMRS is a type of reference signal and is prepared for various channels. Here, unless otherwise specified, it may mean a DMRS for a downlink data channel, specifically, for a PDSCH (Physical Downlink Shared Channel). However, a DMRS for an uplink data channel, specifically, for a PUSCH (Physical Uplink Shared Channel), may be interpreted in the same way as a DMRS for a PDSCH.

The DMRS may be used in a device, for example, in the UE 200 for channel estimation as part of coherent demodulation. The DMRS may be present only in a resource block (RB) used for PDSCH transmission.

The DMRS may have multiple mapping types. Specifically, the DMRS has mapping type A and mapping type B. In mapping type A, a first DMRS is placed in the second or third symbol of the slot. In mapping type A, the DMRS may be mapped based on the slot boundaries, regardless of where the actual data transmission begins in the slot. The reason why the first DMRS is placed in the second or third symbol of the slot may be interpreted because the first DMRS is placed after control resource sets (CORESET).

In mapping type B, a first DMRS may be placed in the first symbol of the data allocation. That is, the position of the DMRS may be given relative to where the data is placed, rather than relative to the slot boundaries.

In addition, the DMRS may have multiple types. Specifically, the DMRS has Type 1 and Type 2. Type 1 and Type 2 differ in mapping in the frequency domain and in the maximum number of orthogonal reference signals. In Type 1, up to 4 orthogonal signals can be output with single-symbol DMRS, and in Type 2, up to 8 orthogonal signals can be output with double-symbol DMRS.

### (2) Functional block configuration of radio communication system

Next, a functional block configuration of the radio communication system 10 will be described.

First, a functional block configuration of the UE 200 will be described.

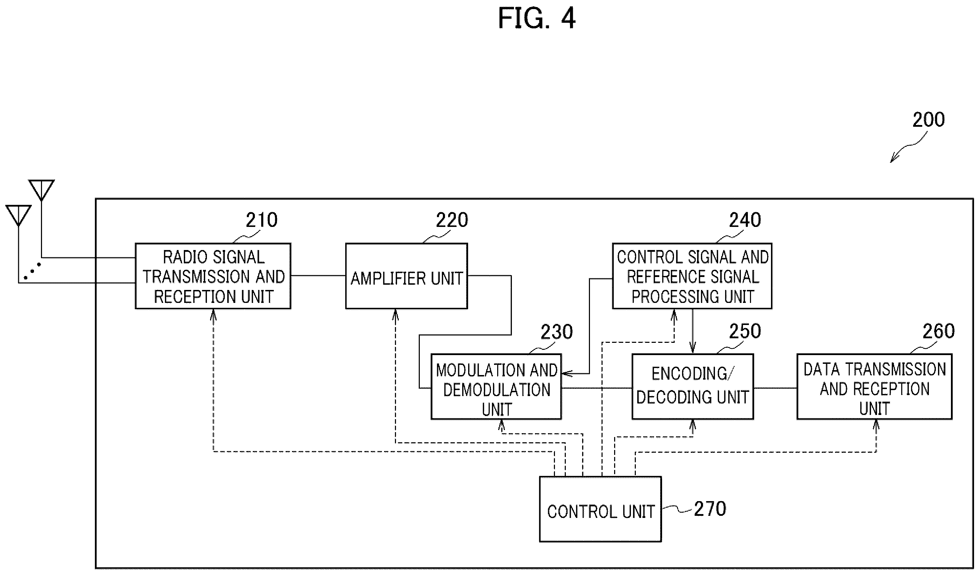

FIG. 4 is a functional block diagram of the UE 200. As illustrated in FIG. 4, the UE 200 includes a radio signal transmission and reception unit 210, an amplifier unit 220, a modulation and demodulation unit 230, a control signal and reference signal processing unit 240, an encoding/decoding unit 250, a data transmission and reception unit 260, and a control unit 270.

The radio signal transmission and reception unit 210 transmits and receives a radio signal according to NR. The radio signal transmission and reception unit 210 supports Massive MIMO, CA that uses a plurality of CCs bundled together, DC that simultaneously performs communication between the UE and each of two NG-RAN nodes, and the like.

In the embodiment, the radio signal transmission and reception unit 210 may constitute a communication unit that performs communication with the base station (gNB 100).

The amplifier unit 220 is configured by a PA (Power Amplifier)/LNA (Low Noise Amplifier) and the like. The amplifier unit 220 amplifies a signal output from the modulation and demodulation unit 230 to a predetermined power level. The amplifier unit 220 also amplifies an RF signal output from the radio signal transmission and reception unit 210.

The modulation and demodulation unit 230 performs data modulation and demodulation, a transmission power configuration, a resource block allocation, and the like for each predetermined communication destination (gNB 100 or another gNB). Cyclic Prefix-Orthogonal Frequency Division Multiplexing (CP-OFDM)/Discrete Fourier Transform-Spread (DFT-S-OFDM) may be applied in the modulation and demodulation unit 230. In addition, DFT-S-OFDM may be used not only for an uplink (UL), but also for a downlink (DL).

The control signal and reference signal processing unit 240 performs processing regarding various control signals transmitted and received by the UE 200, and processing regarding various reference signals transmitted and received by the UE 200.

Specifically, the control signal and reference signal processing unit 240 receives various control signals transmitted from the gNB 100 via a predetermined control channel, for example, the control signals (messages) for the radio resource control layer (RRC). The control signal and reference signal processing unit 240 also transmits various control signals to the gNB 100 via a predetermined control channel.

The control signal and reference signal processing unit 240 performs processing using a reference signal (RS), such as a Demodulation Reference Signal (DMRS) and a Phase Tracking Reference Signal (PTRS).

The DMRS is a known reference signal (pilot signal) for estimating a fading channel used for data demodulation between a terminal-specific base station and the terminal. The PTRS is a terminal-specific reference signal for the purpose of estimating phase noise which is a problem in the high frequency band.

Examples of the reference signals may include, in addition to the DMRS and the PTRS, a Channel State Information-Reference Signal (CSI-RS), a Sounding Reference Signal (SRS), and a Positioning Reference Signal (PRS) for positional information.

The channels include control channels and data channels. The control channels may include a PDCCH (Physical Downlink Control Channel), a PUCCH (Physical Uplink Control Channel), a RACH (Random Access Channel), Downlink Control Information (DCI) including a Random Access Radio Network Temporary Identifier (RA-RNTI)), a Physical Broadcast Channel (PBCH), and the like.

In addition, the data channels may include a PDSCH (Physical Downlink Shared Channel), a PUSCH (Physical Uplink Shared Channel), and the like. "Data" refers to data transmitted via the data channel. The data channels may be read as meaning shared channels.

Here, the control signal and reference signal processing unit 240 may receive downlink control information (DCI). The DCI includes fields for storing DCI Formats, a Carrier indicator (CI), a BWP indicator, an FDRA (Frequency Domain Resource Assignment), a TDRA (Time Domain Resource Assignment), an MCS (Modulation and Coding Scheme), an HPN (HARQ Process Number), an NDI (New Data Indicator), an RV (Redundancy Version), and the like as existing fields.

The value stored in the DCI Format field is an information element that specifies a format of the DCI. The value stored in the CI field is an information element that specifies a CC to which the DCI is applied. The value stored in the BWP indicator field is an information element that specifies a BWP to which the DCI is applied. The BWP that can be specified by a BWP indicator is configured by an information element (BandwidthPart-Config) included in an RRC message. The value stored in the FDRA field is an information element that specifies a frequency domain resource to which the DCI is applied. The frequency domain resource is specified by a value stored in the FDRA field and an information element (RA Type) included in the RRC message. The value stored in the TDRA field is an information element that specifies a time domain resource to which the DCI is applied. The time domain resource is specified by a value stored in the TDRA field and an information element (pdsch-TimeDomainAllocationList, pusch-TimeDomainAllocationList) included in the RRC message. The time domain resource may be specified by a value stored in the TDRA field, and a default table. The value stored in the MCS field is an information element that specifies an MCS to which the DCI is applied. The MCS is specified by a value stored in the MCS, and an MCS table. The MCS table may be specified by an RRC message, or specified by RNTI scrambling. The value stored in the HPN field is an information element that specifies a HARQ process to which the DCI is applied. The value stored in the NDI is an information element that specifies whether the data to which the DCI is applied is the initial transmission data. The value stored in the RV field is an information element that specifies the redundancy of data to which the DCI is applied.

The encoding/decoding unit 250 performs data division/concatenation, channel coding/decoding, and the like for each predetermined communication destination (gNB 100 or another gNB).

Specifically, the encoding/decoding unit 250 divides the data output from the data transmission and reception unit 260 into predetermined sizes, and performs channel coding on the divided data. The encoding/decoding unit 250 also decodes the data output from the modulation and demodulation unit 230, and concatenates the decoded data.

The data transmission and reception unit 260 transmits and receives a protocol data unit (PDU) and a service data unit (SDU). Specifically, the data transmission and reception unit 260 performs assembly/disassembly of PDU/SDU in a plurality of layers (a media access control layer (MAC), a radio link control layer (RLC), a packet data convergence protocol layer (PDCP) and the like). In addition, the data transmission and reception unit 260 performs error correction and retransmission control of data based on HARQ (Hybrid Automatic Repeat Request).

The control unit 270 controls each functional block constituting the UE 200. In the embodiment, the control unit 270 constitutes a control unit that assumes communication to be performed with the gNB 100 on the assumption of a network state (hereinafter, NW state) defined by at least one of whether the gNB 100 receives an uplink signal (hereinafter, UL signal) and whether the gNB 100 transmits a downlink signal (hereinafter, DL signal).

Here, the NW state is defined by a unit time as a minimum unit. Hereinafter, a case where the unit time is a slot will be exemplified. Specifically, the NW state includes a state (hereinafter, Active state) in which the gNB 100 assumes both the reception of a UL signal and the transmission of a DL signal. In addition to the Active state, the NW state may include at least the following states. The NW state may include a state (hereinafter, Non-active state) in which the gNB 100 assumes neither the reception of a UL signal nor the transmission of a DL signal. The Non-active state may be referred to as a Sleep state. The NW state may include a state (hereinafter, DL non-active state) in which the gNB 100 assumes the reception of a UL signal, but does not assume the transmission of a DL signal. The DL non-active state may be referred to as a UL active state. The NW state may include a state (hereinafter, UL non-active state) in which the gNB 100 does not assume the reception of a UL signal, but assumes the transmission of a DL signal. The UL non-active state may be referred to as a DL active state.

Here, the control unit 270 assumes both the transmission of a UL signal and the reception of a DL signal in the Active state. The control unit 270 assumes neither the transmission of a UL signal nor the reception of a DL signal in the Non-active state. The control unit 270 assumes the transmission of a UL signal, but does not assume the reception of a DL signal in the DL non-active state. The control unit 270 does not assumes the transmission of a UL signal, but assumes the reception of a DL signal in the UL non-active state.

The NW state may be associated with an index (NW state index). For example, the Active state may be associated with NW state #0. The Non-active state may be associated with NW state #1. The DL non-active state may be associated with NW state #2. The UL non-active state may be associated with NW state #3.

First, the NW state may be configured quasi-statically. In other words, the NW state may be configured quasi-statically by a higher layer parameter. The NW state index may be used in a higher layer. The details of such an operation will be described later (see operation example 1).

Second, the NW state may be dynamically specified. In other words, the NW state may be dynamically specified by a physical layer (for example, a field included in DCI). The NW state index may be used in the physical layer. The details of such an operation will be described later (see operation example 2).

Third, the NW state may include a specific state (hereinafter, Flexible NW state) that can be changed by the NW state dynamically specified by the downlink control information (DCI). The details of such an operation will be described later (see operation example 3).

Second, a functional block configuration of the gNB 100 will be described.

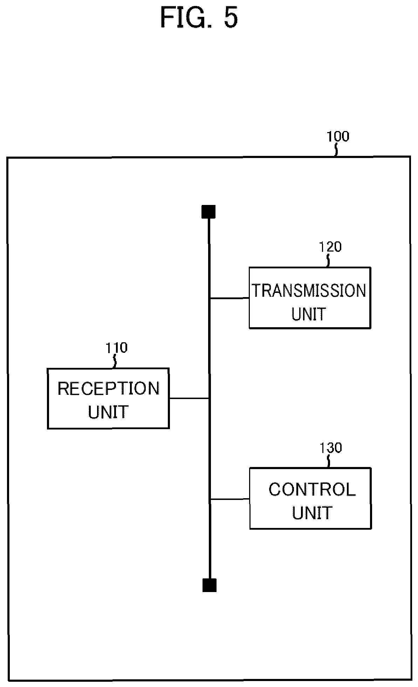

FIG. 5 is a functional block diagram of the gNB 100. As illustrated in FIG. 5, the gNB 100 includes a reception unit 110, a transmission unit 120, and a control unit 130.

The reception unit 110 receives various signals from the UE 200. The reception unit 110 may receive UL signals via PUCCH or PUSCH.

The transmission unit 120 transmits various signals to the UE 200. The transmission unit 120 may transmit DL signals via PDCCH or PDSCH.

In the embodiment, the reception unit 110 and the transmission unit 120 constitute a communication unit that performs communication with the UE 200.

The control unit 130 controls the gNB 100. In the embodiment, the control unit 130 assumes a NW state defined by at least one of whether the gNB 100 receives a UL signal and whether the gNB 100 transmits a DL signal, and assumes communication to be performed with the UE 200.

As described above, the control unit 130 assumes both the reception of a UL signal and the transmission of a DL signal in the Active state. The control unit 130 assumes neither the reception of a UL signal nor the transmission of a DL signal in the Non-active state. The control unit 130 assumes the reception of a UL signal, but does not assume the transmission of a DL signal in the DL non-active state. The control unit 130 does not assume the reception of a UL signal, but assumes the transmission of a DL signal in the UL non-active state.

### (3) Problem

There has been recognition in 3GPP that a reduction in the energy of a network is important with consideration for a sustainable environment. In particular, it has been decided that the reduction in the power consumption of the gNB 100 should be studied. However, a mechanism to specifically reduce the power consumption of the gNB 100 has not yet been decided.

Under such a background, in the embodiment, an mechanism that can appropriately achieve a reduction in the power consumption of the network (in particular, gNB 100) will be described by newly introducing the concept of an NW state.

### (4) Operation Example

Next, an operation example of the embodiment will be described. In the following description, a case where the NW state includes an Active state, a Non-active state, and a DL non-active state will be exemplified. However, the NW state may include one or more states selected from among the Non-active state, the DL non-active state, and a UL non-active state in addition to the Active state. Therefore, the NW state may include the UL non-active state.

### (4.1) Operation Example 1

In operation example 1, the NW state may be configured quasi-statically. In other words, the NW state may be configured quasi-statically by a higher layer parameter. The NW state index may be used in a higher layer. As the options of operation example 1, the following options may be considered.

In option 1, the UE 200 may receive a parameter that periodically configures a pattern of the NW state (NW state pattern). Hereinafter, the parameter is referred to as a higher layer parameter. The higher layer parameter may be referred to as an RRC parameter and may be read as meaning an RRC configuration.

In option 1-1, the NW state pattern may be represented by the NW state configured for each slot for X slots. The NW state pattern may be configured periodically for all slots. X may be predefined in the radio communication system 10, or may be configured by the higher layer parameter, or may be determined (automatically) by the NW state pattern configured by the higher layer parameter.

The NW state pattern may be represented by a bitmap that specifies the NW state for each slot. In other words, the bitmap includes the NW state index for each slot. The bitmap is included in the higher layer parameter.

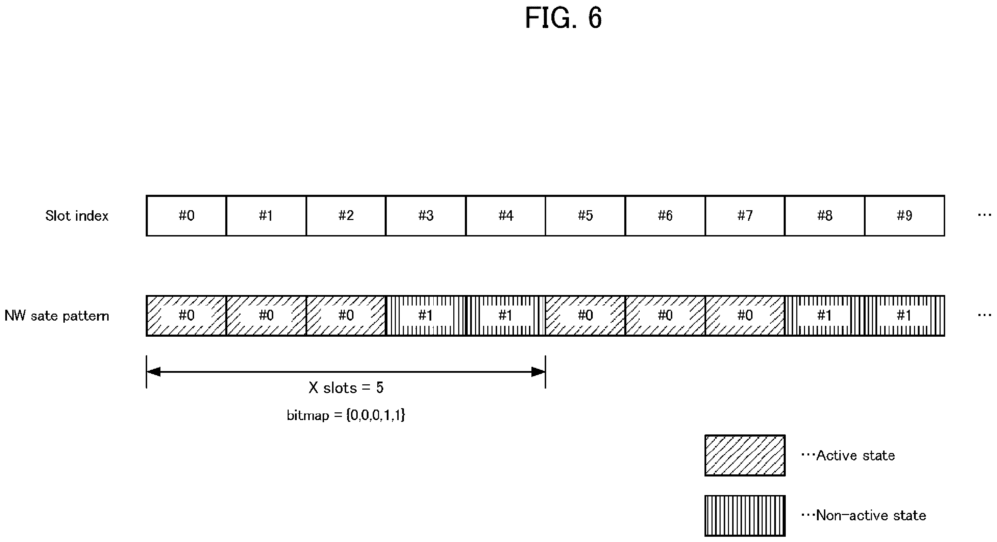

For example, a case where X is 5 slots and the values of the bitmap are {0, 0, 0, 1, 1} will be exemplified. In such a case, as illustrated in FIG. 6, the NW state index #0 (that is, Active state) is applied to the slots #0 to #2, and the NW state index #1 (that is, Non-active state) is applied to the slots #3 to #4. Since the NW state pattern is applied periodically, the NW state index #0 (that is, Active state) is applied to the slots #5 to #7, and the NW state index #1 (that is, Non-active state) is applied to the slots #8 to #9. The NW state pattern is applied repeatedly until the end of the slots configured by the higher layer parameter (maxNrofSlots).

In option 1-2, the NW state pattern may be represented by the number of slots corresponding to each NW state for X slots. X may be predefined in the radio communication system 10, or may be configured by the higher layer parameter, or may be determined (automatically) by the NW state pattern configured by the higher layer parameter.

The number of slots corresponding to each NW state are configured by different higher layer parameters for each NW state. For example, the number of slots corresponding to the NW state index #0 (that is, Active state) may be configured by nrofState0Slots, and the number of slots corresponding to the NW state index #1 (that is, Non-active state) may be configured by nrofState1Slots. The values of different higher layer parameters (for example, nrofState0Slots, nrofState1Slots, or the like) for each NW state may be integers in the range from 0 to X.

The order of each NW state in the X slots may be determined based on the NW state index. For example, the order of each NW state may be determined in ascending order of the NW state index, or in descending order of the NW state index. Alternatively, the order of each NW state may be configured by a higher layer parameter such as "NW state index #0 -> NW state index #2-> NW state index #1".

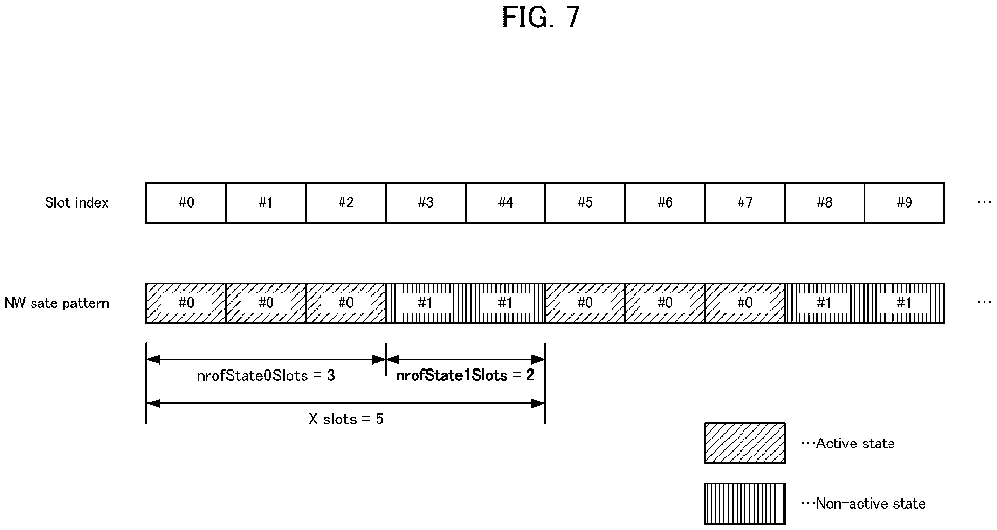

For example, a case will be exemplified in which X is 5 slots, the order of each NW state is determined in ascending order of the NW state index, nrofState0Slots is 3, and nrofState1Slots is 2. In such a case, as illustrated in FIG. 7, the NW state index #0 (that is, Active state) is applied to the slots #0 to #2, and the NW state index #1 (that is, Non-active state) is applied to the slots #3 to #4. Since the NW state pattern is applied periodically, the NW state index #0 (that is, Active state) is applied to the slots #5 to #7, and the NW state index #1 (that is, Non-active state) is applied to the slots #8 to #9. The NW state pattern is applied repeatedly until the end of the slots configured by the higher layer parameter (maxNrofSlots).

In option 2, the UE 200 may receive a higher layer parameter that directly configures the NW state of each slot. The NW state of each slot may be considered to be a NW state pattern.

In option 2-1, the NW state may be configured using one slot as a configuration unit. The higher layer parameter that configures the NW state may include a value (NW state index) corresponding to the number of slots configured by the higher layer parameter (maxNrofSlots). The higher layer parameter that configures the NW state may be represented by a bitmap specifying the NW state for each slot.

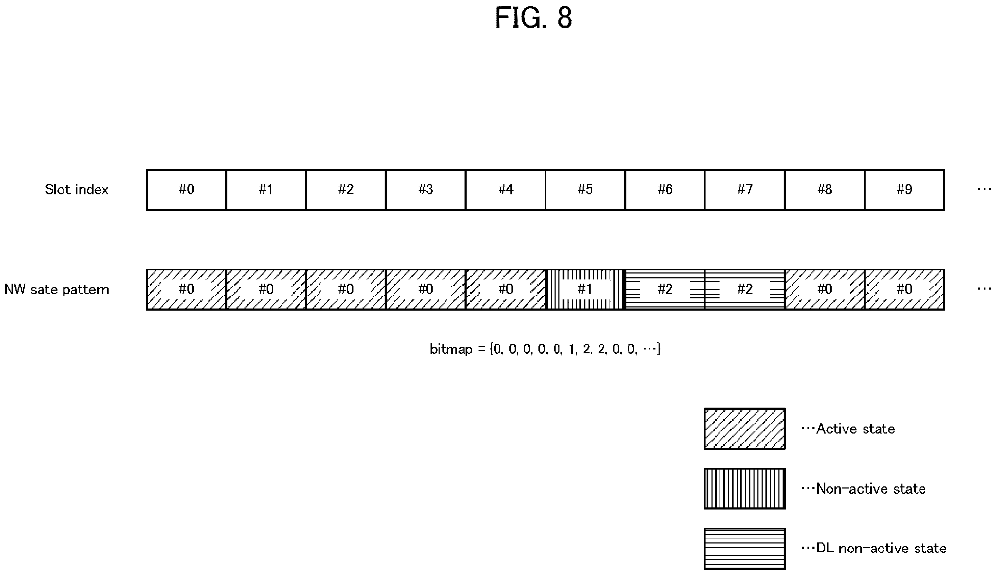

For example, a case where the values of the bitmap are {0, 0, 0, 0, 0, 1, 2, 2, 0, 0, ...} will be exemplified. In such a case, as illustrated in FIG. 8, the NW state index #0 (that is, Active state) is applied to the slots #0 to #4, the NW state index #1 (that is, Non-active state) is applied to the slot #5, the NW state index #2 (that is, DL non-active state) is applied to the slots #6 to #7, and the NW state index #0 (that is, Active state) is applied to the slots #8 to #9. Although not illustrated in FIG. 8, the NW state index included in the bitmap is applied to each slot until the end of the slots configured by the higher layer parameter (maxNrofSlots).

In option 2-2, the NW state may be configured using a group including one or more slots as a configuration unit. As a method of how to configure the group, the following Alts are considered.

In Alt. 1, the number of slots constituting a group may be defined in a fixed manner. For example, the number of slots included in a group may be represented by X. The higher layer parameter that configures the NW state may be represented by a bitmap specifying the NW state for each group. The same NW state is applied to the slots constituting each group. X may be predefined by the radio communication system 10, or may be configured by the higher layer parameter.

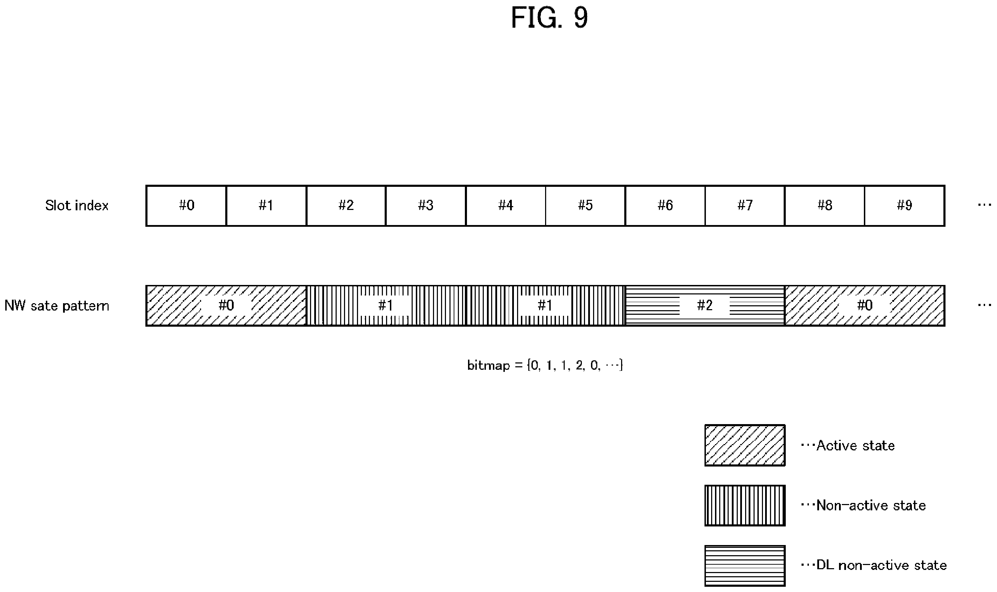

For example, a case where X is 2 slots and the bitmap is {0, 1, 1, 2, 0, ...} will be exemplified. In such a case, as illustrated in FIG. 9, the NW state index #0 (that is, Active state) is applied to the slots #0 to #1, the NW state index #1 (that is, Non-active state) is applied to the slots #2 to #3, the NW state index #1 (that is, Non-active state) is applied to the slots #4 to #5, the NW state index #2 (that is, DL non-active state) is applied to the slots #6 to #7, and the NW state index #0 (that is, Active state) is applied to the slots #8 to #9. Although not illustrated in FIG. 9, the NW state index included in the bitmap is applied to the slots constituting each group until the end of the slots configured by the higher layer parameter (maxNrofSlots).

In Alt. 2, the number of slots constituting a group may be defined for each NW state (NW state index). That is, the number of slots constituting a group corresponding to each NW state index may be defined separately. The number of slots constituting a group corresponding to each NW state may be predefined in the radio communication system 10, or may be configured by the higher layer parameter. The higher layer parameter that configures the NW state may be represented by a bitmap specifying the NW state for each group.

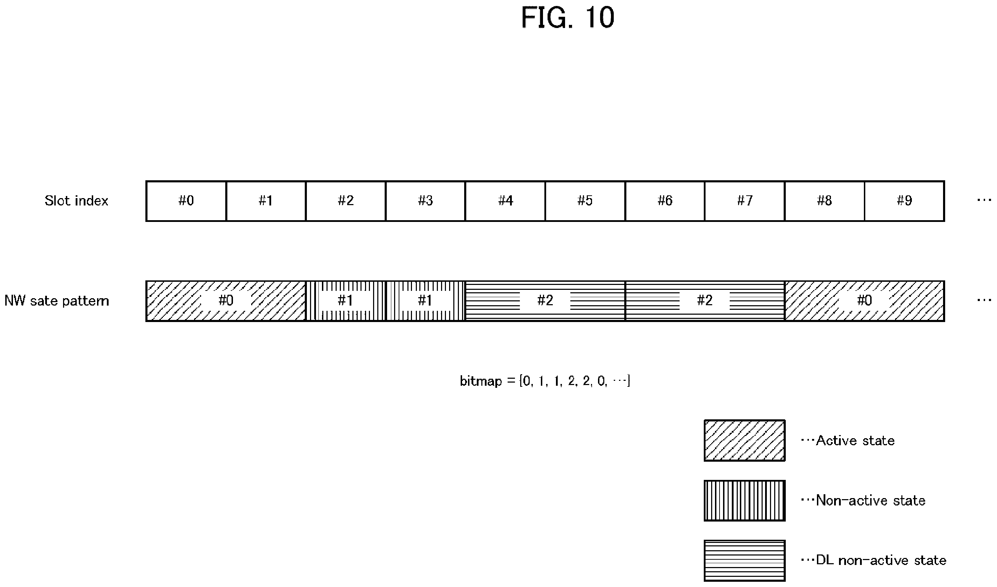

For example, a case will be exemplified in which the number of slots constituting a group corresponding to the NW state index #0 is 2, the number of slots constituting a group corresponding to the NW state index #1 is 1, the number of slots constituting a group corresponding to the NW state index #2 is 2, and the bitmap is {0, 1, 1, 2, 2, 0, ...}. In such a case, as illustrated in FIG. 10, the NW state index #0 (that is, Active state) is applied to the slots #0 to #1, the NW state index #1 (that is, Non-active state) is applied to the slot #2, the NW state index #1 (that is, Non-active state) is applied to the slot #3, the NW state index #2 (that is, DL non-active state) is applied to the slots #4 to #5, the NW state index #2 (that is, DL non-active state) is applied to the slots #6 to #7, and the NW state index #0 (that is, Active state) is applied to the slots #8 to #9. Although not illustrated in FIG. 10, the NW state index included in the bitmap is applied to the slots constituting each group until the end of the slots configured by the higher layer parameter (maxNrofSlots).

As described above, in Alt. 2, the number of slots to which the NW state index included in the bitmap is applied may be configured for each NW state.

### (4.2) Operation Example 2

In operation example 2, the NW state may be dynamically specified. In other words, the NW state may be dynamically specified by a physical layer (for example, a field included in DCI). Specifically, the NW state pattern to be applied to each slot may be specified by the DCI. The NW state pattern may be associated with an index (hereinafter, NW state pattern index). As the options of operation example 2, the following options may be considered:

In option 1, the UE 200 may receive a higher layer parameter that configure one or more NW state patterns. The UE 200 may receive the DCI that specifies one NW state pattern from among one or more NW state patterns configured by the higher layer parameter.

For example, the NW state pattern configured by the higher layer parameter may be represented by the NW state configured for each slot for X slots corresponding to the Flexible NW state. The NW state pattern may be periodically configured for all slots. X may be predefined by the radio communication system 10, or may be configured by the higher layer parameter, or may be determined (automatically) by the NW state pattern configured by the higher layer parameter.

In option 1, the NW state pattern may be configured in the same way as the respective options (option 1-1, option 1-2, option 2-1, and option 2-2) described in operation example 1.

In option 2, one or more NW state patterns may be predefined by the radio communication system 10. The UE 200 may receive the DCI that specifies one NW state pattern from among one or more predefined NW state patterns.

For example, the predefined NW state pattern may be represented by the NW state configured for each slot for X slots corresponding to the Flexible NW state. The NW state pattern may be periodically configured for all slots. X may be predefined in the radio communication system 10, or may be configured by the higher layer parameter, or may be determined (automatically) by the NW state pattern configured by the higher layer parameter.

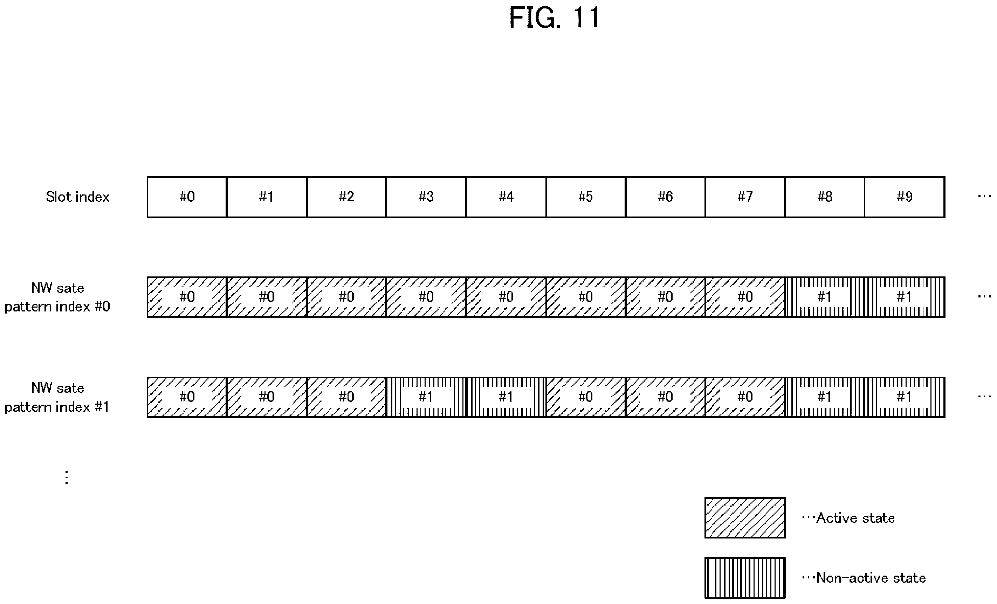

For example, a case will be exemplified in which the NW state pattern corresponding to the NW state pattern index #0 is {0, 0, 0, 0, 0, 0, 0, 0, 1, 1} and the NW state pattern corresponding to the NW state pattern index #1 is {0, 0, 0, 1, 1, 0, 0, 0, 1, 1}. These NW state patterns may be the patterns configured by the higher layer parameter, or the patterns predefined in the radio communication system 10. In such a case, when the DCI specifies the NW state pattern index #0, the NW state index #0 (that is, Active state) is applied to the slots #0 to #7, and the NW state index #1 (that is, Non-active state) is applied to the slots #8 to #9, as illustrated in FIG. 11. The NW state pattern is repeatedly applied until the end of the slots configured by the higher layer parameter (maxNrofSlots). Meanwhile, when the DCI specifies the NW state pattern index #1, the NW state index #0 (that is, Active state) is applied to the slots #0 to #2, the NW state index #1 (that is, Non-active state) is applied to the slots #3 to #4, the NW state index #0 (that is, Active state) is applied to the slots #5 to #7, and the NW state index #1 (that is, Non-active state) is applied to the slots #8 to #9, as illustrated in FIG. 11. The NW state pattern is repeatedly applied until the end of the slots configured by the higher layer parameter (maxNrofSlots).

First, as the DCI (hereinafter, specific DCI) that specifies the NW state pattern (NW state pattern index), the following DCI may be considered.

In option 1, the format of the specific DCI may be the DCI specific to the UE 200 (UE-specific DCI format), or may be the DCI common to one or more UEs (group common DCI format).

In option 2, the format of the specific DCI may be one DCI format selected from among the existing DCI formats (for example, DCI formats 1_1/1_2/2_0), or may be a newly defined DCI (for example, DCI format 2_x).

In option 3, the RNTI used for scrambling the CRC of the specific DCI may be one RNTI selected from among the existing RNTIs (for example, C(Cell)-RNTI, SFI(Slot Format Indication)-RNTI), or may be a newly defined RNTI.

Two or more options selected from among options 1 to 3 may be combined.

For example, the NW state pattern may be specified by the DCI format 2_0 (specific DCI) with a CRC scrambled by an SFI-RNTI. Such specific DCI may be used to specify the NW state pattern when the NW state pattern is configured by a new higher layer parameter. Alternatively, the NW state pattern may be specified by the DCI format 1_1 (specific DCI) with a CRC scrambled by a new RNTI. Such specific DCI may include a field specifying the NW state pattern when the NW state pattern is configured by a new higher layer parameter.

Second, the operation of the UE 200 that receives the specific DCI may include the following options.

In option 1, the specific DCI may refer to the specific number of slots between the slot to which the NW state pattern is applied and a reference slot. That is, after a specific slot from the reference slot, the UE 200 may assume that the NW state pattern is applied. The specific number of slots may be included in the field specifying the NW state pattern index. The specific number of slots may be specified for each DL BWP, or for each UL BWP. The specific number of slots may be greater than or equal to the slot period that monitors the PDCCH related to the specific DCI. The reference slot may be the slot in which the specific DCI is detected, or the slot in which the specific DCI is detected + Y slot. Y may be predefined in the radio communication system 10, or reported by the UE capability.

In option 2, a field that specifies the NW state pattern index may include the number of bits of max{log₂ (maxNWstateIndex + 1), 1}. That is, the UE 200 may assume the number of bits of max{log₂ (maxNWstateIndex + 1), 1} as the field that specifies the NW state pattern index. maxNWstateIndex is a maximum value that the NW state pattern index can take, and may be predefined in the radio communication system 10, or may be configured by the higher layer parameter.

In option 3, the UE 200 may transmit to the gNB 100, an indication notifying whether the DCI (specific DCI) specifying the NW state pattern (NW state pattern index) has been successfully received. The resource used for transmitting the indication may be a resource selected from among PUCCH, PUSCH, and PRACH.

Two or more options selected from among options 1 to 3 may be combined.

### (4.3) Operation Example 3

In operation example 3, the NW state may include a Flexible NW state that can be changed by an NW state dynamically specified by the DCI. For example, the NW state may include the Flexible NW state in addition to the Active state, the Non-active state, the DL non-active state, and the UL non-active state. The NW state dynamically specified by the DCI so as to change the Flexible NW state may be referred to as a dynamic NW state. The state that can be taken as the dynamic NW state may be one or more states selected from among the Active state, the Non-active state, the DL non-active state, and the UL non-active state.

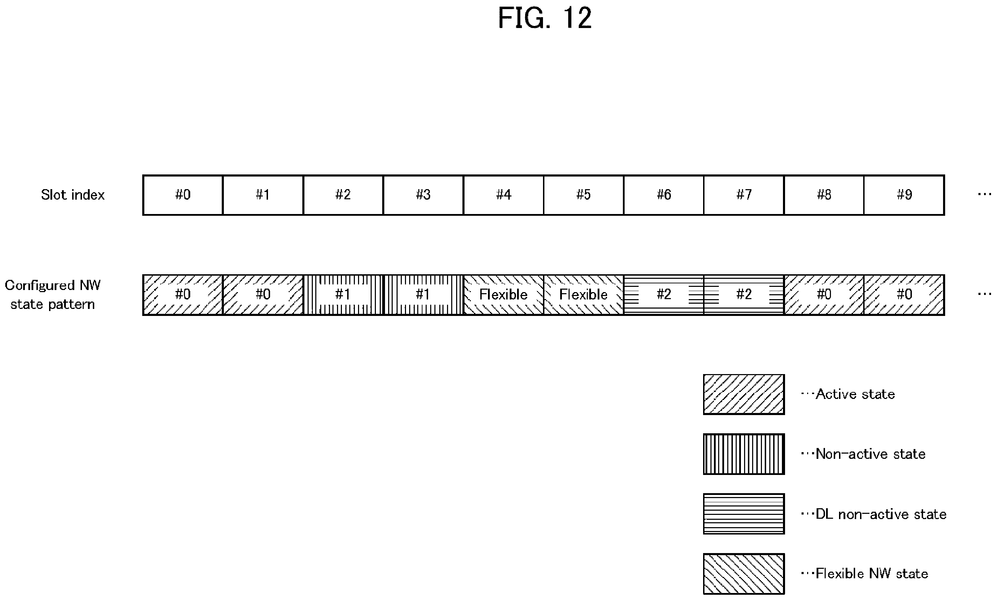

Here, as in operation example 1, the UE 200 may receive a higher layer parameter that quasi-statically configures the NW state pattern. In such a case, the Flexible NW state may be included in the NW state pattern that is configured quasi-statically by the higher layer parameter. For example, as illustrated in FIG. 12, the NW state pattern that is configured quasi-statically (in FIG. 12, "Configured NW state pattern") may include the Flexible NW state in the slots #4 to #5. The Flexible NW state may be associated with the NW state index in the same manner as the Active state, the Non-active state, the DL non-active state, and the UL non-active state.

The UE 200 assumes that the slot corresponding to the Flexible NW state is the dedicated NW state when the Flexible NW state is not changed by the dynamic NW state that is dynamically specified by the DCI. In other words, the UE 200 assumes that the slot corresponding to the Flexible NW state is the dedicated NW state when the NW state pattern including the Flexible NW state is configured but no DCI specifying the dynamic NW state is received. The dedicated NW state may be a state predetermined by the radio communication system 10, or a state configured by the higher layer parameter. The state that can be taken as the dedicated NW state may be one or more states selected from among the Active state, the Non-active state, the DL non-active state, and the UL non-active state.

Meanwhile, the UE 200 assumes that the slot corresponding to the Flexible NW state is the dynamic NW state when the Flexible NW state is changed by the dynamic NW state that is dynamically specified by the DCI. In other words, the UE 200 overwrites the Flexible NW state with the dynamic NW state when the NW state pattern including the Flexible NW state is configured and the DCI specifying the dynamic NW state is received.

First, as the DCI (hereinafter, specific DCI) that specifies the dynamic NW state, the following DCI may be considered.

In option 1, the format of the specific DCI may be the DCI specific to the UE 200 (UE-specific DCI format), or may be the DCI common to one or more UEs (Group common DCI format).

In option 2, the format of the specific DCI may be one DCI format selected from among the existing DCI formats (for example, DCI format 1_1/1_2/2_0), or may be a newly defined DCI (for example, DCI format 2_x).

In option 3, the RNTI used for scrambling the CRC of the specific DCI may be one RNTI selected from among the existing RNTIs (for example, C(Cell)-RNTI, SFI(Slot Format Indication)-RNTI), or may be a newly defined RNTI.

Two or more options selected from among options 1 to 3 may be combined.

For example, the dynamic NW state may be specified by the DCI format 2_0 (specific DCI) with a CRC scrambled by an SFI-RNTI. Such specific DCI may be used to specify the dynamic NW state when the dynamic NW state is configured by a new higher layer parameter. Alternatively, the dynamic NW state may be specified by the DCI format 1_1 (specific DCI) with a CRC scrambled by a new RNTI. Such specific DCI may include a field specifying the dynamic NW state when the dynamic NW state is configured by a new higher layer parameter.

Second, as the content of the specific DCI, the following options may be considered.

In option 1, the specific DCI includes a field specifying the dynamic NW state that is applied to all slots corresponding to the Flexible NW state. For example, the UE 200 assumes that all slots corresponding to the Flexible NW state are the NW state #1 when receiving the specific DCI specifying the NW state #1 (that is, Non-activated state) as the dynamic NW state,.

In option 2, one or more NW state patterns may be predefined in the radio communication system 10, or may be configured by the higher layer parameter. Each NW state pattern may be represented by the NW state configured for each slot for X slots corresponding to the Flexible NW state. The NW state pattern may be configured periodically for all slots. X may be predefined in the radio communication system 10, or may be configured by the higher layer parameter, or may be determined (automatically) by the NW state pattern configured by the higher layer parameter.

One or more NW state patterns may be configured in the same way as the respective options (option 1-1, option 1-2, option 2-1, and option 2-2) described in operation example 1 except that the slot corresponding to the Flexible NW state is a target.

In option 2, the specific DCI may include a new field specifying one NW state pattern selected from among one or more NW state patterns.

Third, the operation of the UE 200 that receives the specific DCI may include the following options.

In option 1, the specific DCI may refer to the specific number of slots between the slot to which the NW state pattern is applied and a reference slot. That is, after a specific slot from the reference slot, the UE 200 may assume that the Flexible NW state is the dynamic NW state. The specific number of slots may be included in the field specifying the dynamic NW state. The specific number of slots may be specified for each DL BWP, or for each UL BWP. The specific number of slots may be greater than or equal to the slot period that monitors the PDCCH related to the specific DCI. The reference slot may be the slot in which the specific DCI is detected, or the slot in which the specific DCI is detected + Y slot. Y may be predefined in the radio communication system 10, or reported by the UE capability.

In option 2, a field that specifies the dynamic NW state may include the number of bits of max{log₂ (maxNWstateIndex + 1), 1}. maxNWstateIndex is a maximum value that the NW state index corresponding to the dynamic NW state can take, and may be predefined in the radio communication system 10, or may be configured by the higher layer parameter. That is, the UE 200 may assume the number of bits of max{log₂ (maxNWstateIndex + 1), 1} as the field that specifies the dynamic NW state.

In option 3, the UE 200 may transmit to the gNB 100, an indication notifying whether the DCI (specific DCI) specifying the dynamic NW state has been successfully received. The resource used for transmitting the indication may be a resource selected from among PUCCH, PUSCH, and PRACH.

Two or more options selected from among options 1 to 3 may be combined.

### (5) Operation/Effect

The embodiment makes it possible to realize a mechanism that can appropriately achieve a reduction in the power consumption of a network (in particular, gNB 100) by newly introducing the concept of an NW state defined by at least one of whether the gNB 100 receives a UL signal and whether the gNB 100 transmits a DL signal. For example, the NW state may include one or more states selected from among a Non-active state, a DL non-active state, and a UL non-active state in addition to an Active state. In the Non-active state, the power consumption of the gNB 100 associated with both the UL reception and DL transmission can be reduced. In the DL non-active state, the power consumption of the gNB 100 associated with the DL transmission can be reduced. In the UL non-active state, the power consumption of the gNB 100 associated with the UL reception can be reduced.

In the embodiment, the NW state may be configured quasi-statically. This configuration makes it possible to reduce the power consumption of the gNB 100 while reducing the signaling load in the physical layer.

In the embodiment, the NW state may be configured dynamically. This configuration makes it possible to quickly reduce the power consumption of the gNB 100 according to the situation. When the DCI specifies the NW state pattern configured by the higher layer parameter, or the predefined NW state pattern, the signaling load in the physical layer can be reduced.

In the embodiment, the NW state includes the Flexible NW state that can be changed by the DCI. This configuration makes it possible to flexibly reduce the power consumption of the gNB 100 according to the situation.

### (6) Other Embodiments

Although the contents of the present invention have been described above with reference to the embodiment, it will be apparent to those skilled in the art that the present invention is not limited to the above description and that various modifications and improvements are possible.

In the above disclosure, the case has been described in which the higher layer parameter and the DCI are used in the operation example 1-3, the options of each operation example, and the Alts. However, the above disclosure is not limited thereto. One or more elements selected from among the RRC configuration, MAC CE, DCI, and UE capability may be used in the operation examples 1-3, the options of each operation example, and the Alts. For example, the NW state pattern that is configured quasi-statically by the higher layer parameter (RRC configuration) may be activated by MAC CE, or deactivated by MAC CE.

In the above disclosure, the slot is exemplified as a time unit that defines the NW state. However, the above disclosure is not limited to thereto. The time unit that defines the NW state may be one or more symbols. In such a case, the slot may be read as meaning one or more symbols.

Although not specifically mentioned in the above disclosure, the following UE capability may be defined. The following UE capability may be reported from the UE 200 to the gNB 100. For example, the UE capability may include an information element that includes whether the UE 200 supports the NW state that is configured quasi-statically (operation example 1). The UE capability may include an information element that includes whether the UE 200 supports the NW state that is dynamically configured (operation example 2). The UE capability may include an information element that includes whether the UE 200 supports a combination of the NW state that is configured quasi-statically and the NW state that is dynamically configured (operation example 3). In other words, the UE capability may include an information element that includes whether the UE 200 supports the Flexible NW state included in the NW state (operation example 3). The UE capability may include an information element that includes whether the UE 200 supports either the options of each operation example, or the Alts.

Although not specifically described in the above disclosure, from a viewpoint of distinguishing between the specific DCI (operation example 2) that specifies the NW state pattern index and the specific DCI (operation example 3) that specifies the dynamic NW state, the specific DCI according to operation example 2 may be referred to as the first specific DCI, and the DCI according to operation example 3 may be referred to as the second DCI.

In the above disclosure, terms such as configure, activate, update, indicate, enable, specify, and select may be read interchangeably. Similarly, terms such as link, associate, correspond, and map may be read interchangeably, and terms such as allocate, assign, monitor, and map may be read interchangeably.

In addition, terms such as specific, dedicated, UE-specific, and UE-dedicated may be read interchangeably. Similarly, terms such as common, shared, group-common, UE-common, and UE-shared may be read interchangeably.

The block diagram (FIGS. 4 and 5) used in the description of the above-described embodiment illustrates blocks in units of functions. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

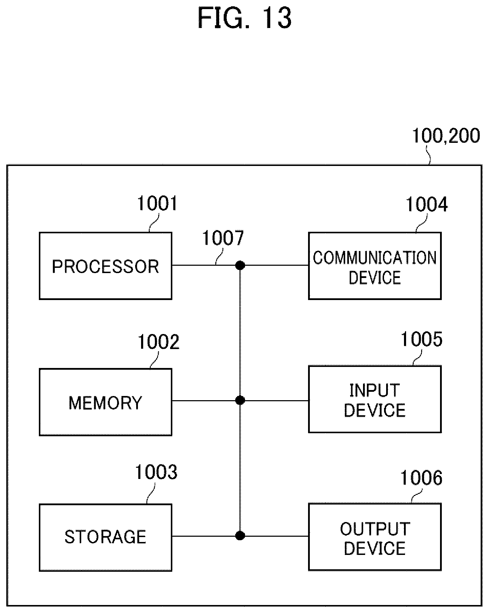

Further, the above-described gNB 100 and UE 200 (the device) may function as a computer that performs processing of a radio communication method of the present disclosure. FIG. 13 is a diagram illustrating an example of a hardware configuration of the device. As illustrated in FIG. 13, the device may be configured as a computer device including a processor 1001, a memory 1002, a storage 1003, a communication device 1004, an input device 1005, an output device 1006, a bus 1007, and the like.

Furthermore, in the following description, the term "device" can be read as meaning circuit, device, unit, or the like. The hardware configuration of the device may include one or more devices illustrated in the figure or may not include some of the devices.

Each of the functional blocks of the devices (FIG. 4) is implemented by means of any of hardware elements of the computer device or a combination of the hardware elements.

Each function in the device is realized by loading predetermined software (programs) on hardware such as the processor 1001 and the memory 1002 so that the processor 1001 performs arithmetic operations to control communication via the communication device 1004 and to control at least one of reading and writing of data on the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus." The above recording medium may be a database including the memory 1002 and/or the storage 1003, a server, or any other appropriate medium.

The communication apparatus 1004 is hardware (transmitting/receiving device) for allowing inter-computer communication via at least one of wired and wireless networks, and may be referred to as, for example, a "network device, " a "network controller," a "network card," a "communication module," and so on.

The communication apparatus 1004 may be configured to include a high frequency switch, a duplexer, a filter, a frequency synthesizer, and so on in order to realize, for example, at least one of frequency division duplex (FDD) and time division duplex (TDD).

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the device may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these. According to the above, a case is described in which there is a single network node other than the base station 10. However, a combination of multiple other network nodes may be considered (e.g., MME and S-GW).

Information or signals (information and the like) may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any of a one of various different technologies. For example, data, an instruction, a command, information, a signal, a bit, a symbol, a chip, or the like, described throughout the present application, may be represented by a voltage, an electric current, electromagnetic waves, magnetic fields, magnetic particle, optical fields, a photon, or a combination thereof.

It should be noted that a term used in the present specification and/or term required for understanding of the present specification may be replaced by a term having the same or similar meaning. For example, a channel and a symbol may be a signal (signaling). Further a signal may also be a message. Further, the component carrier (CC) may be referred to as a carrier frequency, cell, frequency carrier, or the like.

As used in the present disclosure, the terms "system" and "network" are used interchangeably.

Furthermore, the information, parameters, and the like, described in the present disclosure may be expressed using absolute values, relative values from a predetermined values, or they may be expressed using corresponding different information. For example, a radio resource may be what is indicated by an index.

The names used for the parameters described above are not used as limitation. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))).

The term "cell" or "sector" refers to part of or the entire coverage area of at least one of a base station and a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS), " "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a mobile station (hereinafter, a user terminal). For example, each aspect/embodiment of the present disclosure may be applied to the structure that replaces a communication between a base station and a mobile station with a communication between a plurality of mobile stations (for example, which may be referred to as "Device-to-Device (D2D)," "Vehicle-to-Everything (V2X)," and the like). In this case, mobile stations may have the functions of the base stations described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the mobile station in the present disclosure may be interpreted as base station. In this case, the base station may have the functions of the mobile station described above.

A radio frame may be constituted of one or a plurality of periods (frames) in the time domain. Each of one or a plurality of periods (frames) constituting a radio frame may be referred to as a "subframe."

Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe, " a "long subframe, " a "slot," or the like. A TTI that is shorter than a normal TTI may be referred to as a "shortened TTI, " a "short TTI, " a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

"Means" included in the configuration of each of the above apparatuses may be replaced by "parts", "circuits", "devices", etc.

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

In the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, where an article is added by translation, for example "a", "an", and "the", the disclosure may include that the noun following these articles is plural.

As used herein, the term "determining" may encompasses a wide variety of actions. For example, "determining" may be regarded as judging, calculating, computing, processing, deriving, investigating, looking up (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing and the like. That is, "determining" may be regarded as a certain type of action related to determining.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

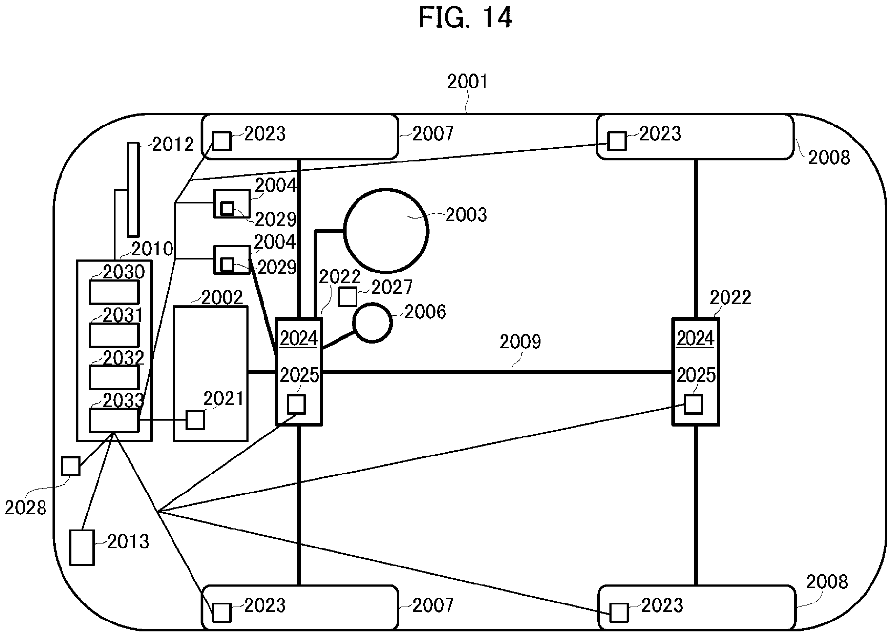

FIG. 14 shows a configuration example of a vehicle 2001. As shown in FIG. 14, the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021 to 2029, an information service unit 2012, and a communication module 2013.

The drive unit 2002 may include, for example, an engine, a motor, and a hybrid of an engine and a motor.

The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2027 provided in the vehicle. The electronic control unit 2010 may be referred to as an ECU (Electronic control unit) .

The signals from the various sensors 2021 to 2028 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 1 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 1 via a communication port. For example, the communication module 2013 transmits and receives data via a communication port 2033, to and from the drive unit 2002, the steering unit 2003, the accelerator pedal 2004, the brake pedal 2005, the shift lever 2006, the left and right front wheels 2007, the left and right rear wheels 2008, the axle 2009, the microprocessor 2031 and the memory (ROM, RAM) 2032 in the electronic control unit 2010, and sensors 2021 to 2028 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal coming from a current sensor and input to the electronic control unit 2010 to an external device via radio communication. Further, the communication module 2013 transmits a rotation speed signal of a front wheel and a rear wheel acquired by the revolution sensor 2022, a pressure signal of a front wheel and a rear wheel acquired by a pneumatic sensor 2023, a speed signal of a vehicle acquired by a vehicle speed sensor 2024, an acceleration signal acquired by an acceleration sensor 2025, an accelerator pedal pressed-amount signal acquired by an accelerator pedal sensor 2029, a brake pedal pressed-amount signal acquired by a brake pedal sensor 2026, an operation signal of the shift lever acquired by a shift lever sensor 2027, and a detection signal acquired by an object detection sensor 2028 for detecting obstacles, vehicles, pedestrians, and the like input to the electronic control unit 2010 to an external device via radio communication.

The communication module 2013 receives various types of information (traffic information, signal information, inter-vehicle information, etc.) transmitted from the external devices and displays the received information on the information service unit 2012 provided in the vehicle. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021-2028, etc., mounted in the vehicle 2001.

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### <Note>

The above disclosure may also be expressed as follows:

A first feature is a terminal comprising: a communication unit that performs communication with a base station; and a control unit that assumes communication to be performed with the base station according to a network state defined by at least one of whether the base station receives an uplink signal and whether the base station transmits a downlink signal, wherein the network state is defined by a unit time as a minimum unit, and is configured quasi-statically.

A second feature is a terminal in which, in the first feature, the communication unit receives a parameter that periodically configures a pattern of the network state.

A third feature is a terminal in which, in the first feature or the second feature, the communication unit receives a parameter that directly configures the network state using one unit time as a configuration unit.

A fourth feature is a terminal in which, in the first feature or the second feature, the communication unit receives a parameter that directly configures the network state using a group including one or more unit times as a configuration unit.

A fifth feature is a base station comprising: a communication unit that performs communication with a terminal; and a control unit that assumes communication to be performed with the terminal according to a network state defined by at least one of whether the base station receives an uplink signal and whether the base station transmits a downlink signal, wherein the network state is defined by a unit time as a minimum unit, and is configured quasi-statically.

A sixth feature is a radio communication system including a terminal and a base station, the terminal comprising: a communication unit that performs communication with the base station; and a control unit that assumes communication to be performed with the base station according to a network state defined by at least one of whether the base station receives an uplink signal and whether the base station transmits a downlink signal, wherein the network state is defined by a unit time as a minimum unit, and is configured quasi-statically.

A seventh feature is a radio communication method comprising: a step of performing communication with a base station; and a step of assuming communication to be performed with the base station according to a network state defined by at least one of whether the base station receives an uplink signal and whether the base station transmits a downlink signal, wherein the network state is defined by a unit time as a minimum unit, and is configured quasi-statically.

### Reference Signs List

- 10: Radio communication system
- 20: NG-RAN
- 100: gNB
- 110: Reception unit
- 120: Transmission unit
- 130: Control unit
- 200: UE
- 210: Radio signal transmission and reception unit
- 220: Amplifier unit
- 230: Modulation and demodulation unit
- 240: Control signal and reference signal processing unit
- 250: Encoding/decoding unit
- 260: Data transmission and reception unit
- 270: Control unit
- 1001: Processor
- 1002: Memory
- 1003: Storage
- 1004: Communication device
- 1005: Input device
- 1006: Output device
- 1007: Bus
- 2001: Vehicle
- 2002: Drive unit
- 2003: Steering unit
- 2004: Accelerator pedal
- 2005: Brake pedal
- 2006: Shift lever
- 2007: Left and right front wheels
- 2008: Left and right rear wheels
- 2009: Axle
- 2010: Electronic control unit
- 2012: Information service unit
- 2013: Communication module
- 2021: Current sensor
- 2022: Revolution sensor
- 2023: Pneumatic sensor
- 2024: Vehicle speed sensor
- 2025: Acceleration sensor
- 2026: Brake pedal sensor
- 2027: Shift lever sensor
- 2028: Object detection sensor
- 2029: Accelerator pedal sensor
- 2030: Driving support system unit
- 2031: Microprocessor
- 2032: Memory (ROM, RAM)
- 2033: Communication port (IO port)

## Claims

1. A terminal comprising:
a communication unit that performs communication with a base station; and
a control unit that assumes communication to be performed with the base station according to a network state defined by at least one of whether the base station receives an uplink signal and whether the base station transmits a downlink signal, wherein
the network state is defined by a unit time as a minimum unit, and is configured quasi-statically.

2. The terminal according to claim 1, wherein
the communication unit receives a parameter that periodically configures a pattern of the network state.

3. The terminal according to claim 1, wherein
the communication unit receives a parameter that directly configures the network state using one unit time as a configuration unit.

4. The terminal according to claim 1, wherein
the communication unit receives a parameter that directly configures the network state using a group including one or more unit times as a configuration unit.

5. A base station comprising:
a communication unit that performs communication with a terminal; and
a control unit that assumes communication to be performed with the terminal according to a network state defined by at least one of whether the base station receives an uplink signal and whether the base station transmits a downlink signal, wherein
the network state is defined by a unit time as a minimum unit, and is configured quasi-statically.

6. A radio communication system including a terminal and a base station, the terminal comprising:
a communication unit that performs communication with the base station; and
a control unit that assumes communication to be performed with the base station according to a network state defined by at least one of whether the base station receives an uplink signal and whether the base station transmits a downlink signal, wherein
the network state is defined by a unit time as a minimum unit, and is configured quasi-statically.

7. A radio communication method comprising:
a step of performing communication with a base station; and
a step of assuming communication to be performed with the base station according to a network state defined by at least one of whether the base station receives an uplink signal and whether the base station transmits a downlink signal, wherein
the network state is defined by a unit time as a minimum unit, and is configured quasi-statically.
